# EUROPEAN PATENT APPLICATION

(11) **EP 4 746 259 A1**
(43) Date of publication of application: **20.05.2026**
(21) Application number: 25210036.7
(22) Date of filing: 21.10.2025
(51) Int. Cl.: H02K 5/02, H02K 5/20, H02K 9/197

(54) **ROTATING ELECTRIC MACHINE**

(30) Priority: 18.11.2024 JP 2024200712
(71) Applicant: AISIN CORPORATION, Aichi 448-8650 (JP)
(72) Inventor: TSUDA, Teppei, Kariya, 448-8650 (JP); KATO, Mitsuhiko, Kariya, 448-8650 (JP); TAMURA, Ryoya, Kariya, 448-8650 (JP); DOI, Takayuki, Kariya, 448-8650 (JP)
(74) Representative: Kramer Barske Schmidtchen Patentanwälte PartG mbB

(57) **Abstract**

To reduce necessity of sealing and eliminate need for shrink fitting while enabling a stator core (211) to be efficiently cooled. Disclosed is a rotating electric machine (1) including a rotor (30), a stator core (211) including a slot in which an electrically conductive winding is disposed, and a tubular member in a tubular shape in which a rotation axis (12) of the rotor (30) is positioned in the center, the tubular member being elastically expandable in a radial direction and having heat conductivity. The tubular member includes a refrigerant flow path (95) between inner and outer circumferential faces (901, 902) thereof, and the tubular member is provided on the stator core (211) in such a way that the inner circumferential face (901) of the tubular member is in close contact with an outer circumferential face of the stator core (211).

## Description

### TECHNICAL FIELD

This disclosure generally relates to a rotating electric machine.

### BACKGROUND DISCUSSION

There is known a technique in which an outer circumferential face of a stator core is covered with a water-immersion resistant cladding, and a space surrounded by the cladding, an inner circumferential face of a case, and a pair of sealing members on both sides in an axial direction is used as a refrigerant flow path (for example, see Japanese Patent Application Laid-Open No. 2019-134567).

However, with the aforementioned technique, there is a problem that it is difficult to secure a sealing property for a long period of time when both sides in the axial direction are sealed with the sealing members after the stator core is covered with the water-immersion resistant cladding.

In contrast, with a method in which an aluminum water jacket is shrink-fit to the stator core, the aforementioned problem can be solved, but this method has a problem of causing stress to be applied to the stator core and iron loss to increase. In addition, there are other problems with this method, for example, the case needs to be heated during shrink fitting, and shrink fitting to a shape other than a cylindrical shape is difficult.

A need thus exists for a rotating electric machine that reduces necessity of sealing and eliminates need for shrink fitting while enabling the stator core to be efficiently cooled.

### SUMMARY

In one aspect of this disclosure, there is provided a rotating electric machine that includes:
a rotor;
a stator core including a slot in which an electrically conductive winding is disposed; and
a tubular member in a tubular shape in which a rotation axis of the rotor is positioned in the center, the tubular member being elastically expandable in a radial direction and having heat conductivity, wherein
the tubular member includes a refrigerant flow path between inner and outer circumferential faces and the tubular member is provided on the stator core in such a way that the inner circumferential face of the tubular member is in close contact with an outer circumferential face of the stator core.

According to the one aspect of this disclosure, necessity of sealing is reduced and need for shrink fitting is eliminated while enabling the stator core to be efficiently cooled.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a cross-sectional view schematically illustrating an example structure of a cross-section of a rotating electric machine according to an embodiment;
FIG. 2 is a plan view in which a stator and a case of the rotating electric machine are viewed in an axial direction;
FIG. 3 is a diagram illustrating a refrigerant flow path of a flow path forming member being expanded in a circumferential direction;
FIG. 4 is a principal cross-sectional view of the flow path forming member, which is a cross-sectional view taken along a cutting plane including a rotation axis;
FIG. 5 is a schematic diagram illustrating an example of a cooling system that circulates through the refrigerant flow path of the flow path forming member according to the embodiment;
FIG. 6 is a cross-sectional view illustrating examples of an inlet and an outlet of the refrigerant flow path; and
FIG. 7 is a diagram for describing a rotating electric machine of a variation example.

### DETAILED DESCRIPTION

Embodiments will be described in detail below with reference to the attached drawings. It should be noted that dimensions and ratios in the drawings are merely illustrative and not limiting, and shapes and the like in the drawings may be partially exaggerated for the sake of explanatory convenience. In the drawings, reference signs may be assigned to only some of a plurality of portions having the same characteristics for enhancing visibility.

Fig, 1 is a cross-sectional view schematically illustrating an example structure of a cross-section of a rotating electric machine 1 according to an embodiment.

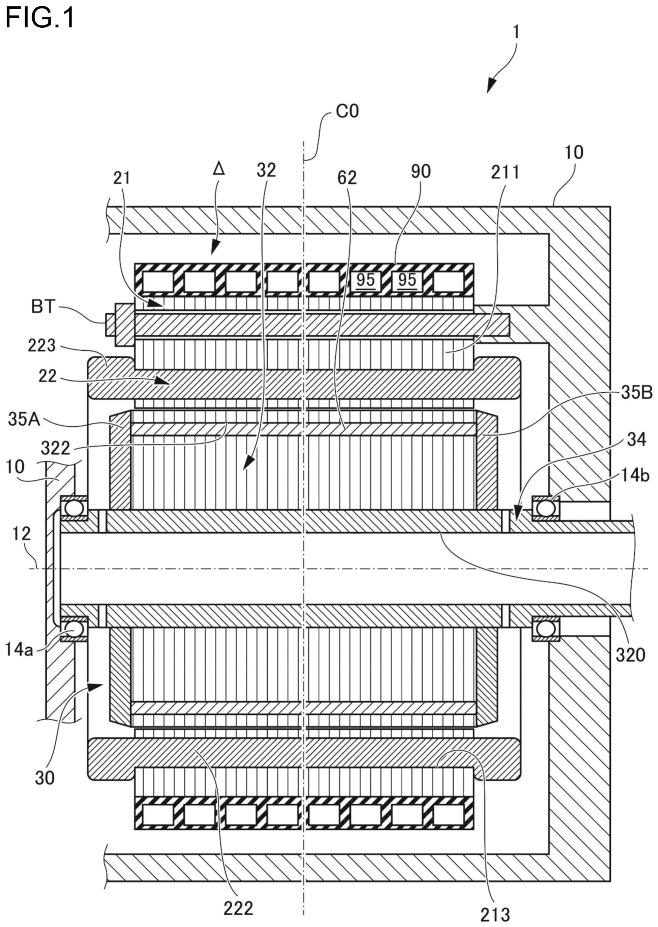

In FIG. 1, a rotation axis 12 of a rotating electric machine 1 is illustrated. In the following description, an axial direction refers to a direction in which the rotation axis (center of rotation) 12 of the rotating electric machine 1 extends, an axially outer side refers to a side that is away in the axial direction from the center C0 of a stator core 211, and an axially inner side refers to a side that is directed toward the center C0 of the stator core 211 in the axial direction. A radial direction refers to a radial direction with the rotation axis 12 in the center, a radially outer side refers to a side that is away from the rotation axis 12, and a radially inner side refers to a side that is directed toward the rotation axis 12.

The rotating electric machine 1 may be a motor for driving a vehicle used in, for example, a hybrid vehicle or an electric vehicle. The rotating electric machine 1 may be a motor used for any other use.

The rotating electric machine 1 is an inner rotor type and a stator 21 is provided in such a way as to surround the radially outer side of a rotor 30. The stator 21 is fixed to a motor case 10 on the radially outer side. The stator 21 includes the stator core 211 constructed of, for example, stacked annular magnetic steel sheets, and a plurality of slots 213 around which a stator coil 22 is wound are formed on the radially inner side of the stator core 211. In a variation example, the stator core 211 may be formed of a green compact made by compressing and hardening magnetic powders.

In the present embodiment, the stator coil 22 is constructed of a flat wire. The stator coil 22 may be constructed of a segmented coil that may be U-shaped when viewed in a direction perpendicular to the axial direction.

The stator coil 22 includes a slot insertion section 222 and a coil end 223. The slot insertion section 222 is inserted into the slot 213 of the stator core 211. The slot insertion section 222 is disposed in each of the slots 213. The coil end 223 extends toward the axially outer side with respect to end faces in the axial direction of the stator core 211 and connects a plurality of the slot insertion sections 222 positioned in different slots 213.

The rotor 30 is disposed on the radially inner side with respect to the stator 21.

The rotor 30 includes a rotor core 32, a rotor shaft 34, endplates 35A and 35B, and a magnet 62.

The rotor core 32 is fixed to the rotor shaft 34 on an outer surface in the radial direction of the rotor shaft 34 and rotates in conjunction with the rotor shaft 34. The rotor core 32 includes a shaft hole 320 into which the rotor shaft 34 is fit. The rotor core 32 may be fixed to the rotor shaft 34 by means of a method such as shrink fitting or press fitting. For example, the rotor core 32 may be joined to the rotor shaft 34 by means of a key joint or a spline joint. The rotor shaft 34 is rotatably supported by the motor case 10 through bearings 14a and 14b. The rotor shaft 34 defines the rotation axis 12 of the rotating electric machine 1.

The rotor core 32 is constructed of, for example, stacked annular magnetic steel sheets. In the rotor core 32, the magnet 62 is embedded. In other words, the rotor core 32 includes a magnet hole 322 penetrating through the rotor core 32 in the axial direction and the magnet 62 is inserted into and fixed to the magnet hole 322. In a variation example, the rotor core 32 may be formed of a green compact made by compressing and hardening magnetic powders.

Although the rotating electric machine 1 having a specific structure is illustrated in FIG. 1, the structure of the rotating electric machine 1 is not limited to this specific structure. For example, while the rotor shaft 34 is hollow in FIG. 1, the rotor shaft 34 may be solid. The magnet 62 may be omitted. The rotor may include field windings.

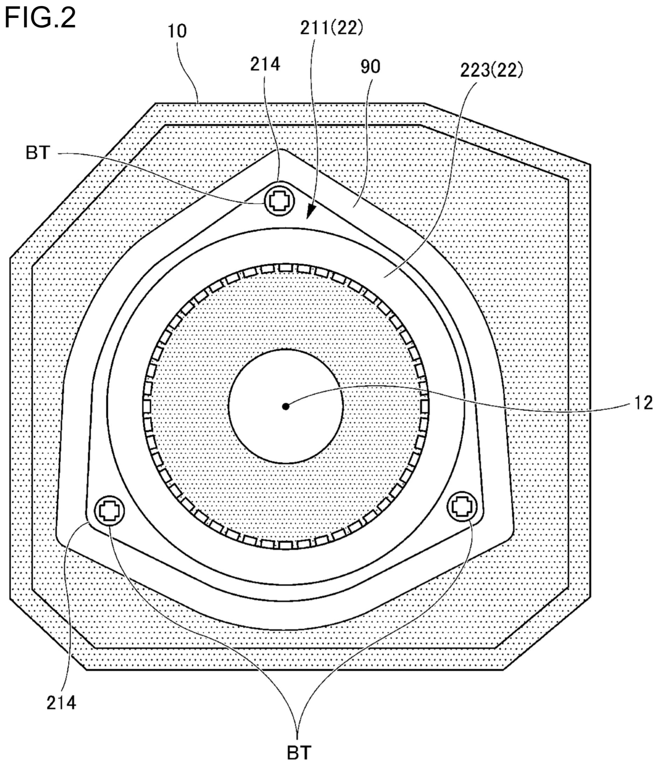

The rotating electric machine 1 according to the present embodiment includes, in its distinctive configuration, a flow path forming member 90. The flow path forming member 90 and its related configuration will be described in detail below with reference to FIG. 1 as well as FIG. 2 and later.

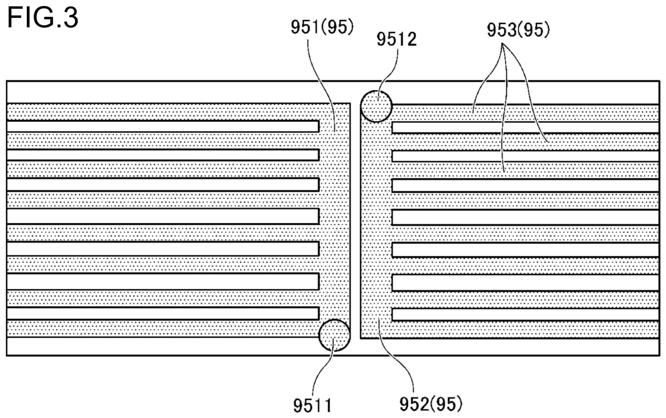

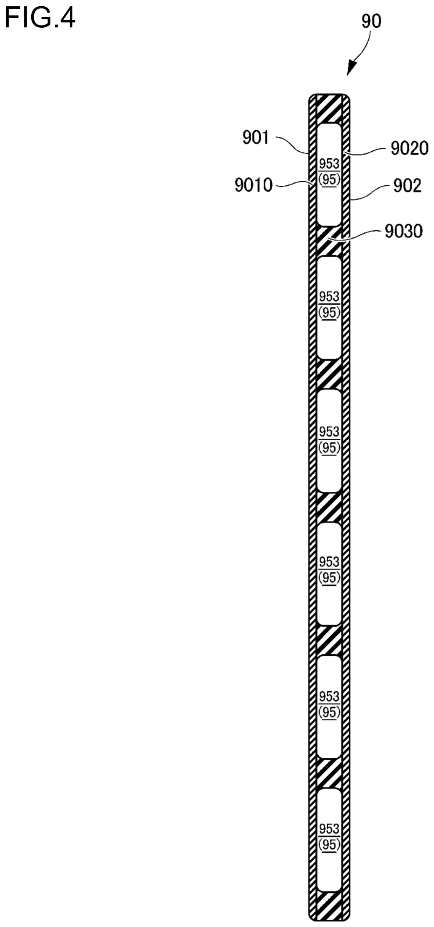

FIG. 2 is a plan view in which the stator 21 and the case 10 of the rotating electric machine 1 are viewed in the axial direction. In FIG. 2, illustration of the rotor 30 is omitted and only the motor case 10 is hatched for enhancing visibility. FIG. 3 is a diagram illustrating a refrigerant flow path 95 of the flow path forming member 90 expanded in a circumferential direction. FIG. 4 is a principal cross-sectional view of the flow path forming member 90, which is a cross-sectional view taken along a cutting plane passing through the rotation axis 12. It should be noted that the right end and the left end in FIG. 3 are continuous. In FIG. 3, a portion depicting the refrigerant flow path 95 is hatched for enhancing visibility.

In the present embodiment, the flow path forming member 90 is provided on the radially outer side of the stator core 211.

The flow path forming member 90 has a tubular shape in which the rotation axis 12 is positioned in the center. The flow path forming member 90 is elastically expandable in the radial direction and has heat conductivity. For example, the flow path forming member 90 may be made from thermoplastic polyurethane elastomer (TPU), ethylene-propylene rubber (EPDM), silicon rubber, or the like. It should be noted that the flow path forming member 90 may include filles for improving heat conductivity.

The flow path forming member 90 includes the refrigerant flow path 95 between an inner circumferential face 901 and an outer circumferential face 902. In other words, the flow path forming member 90 includes the refrigerant flow path 95 having a shape that does not open in the radial direction. The shape of the refrigerant flow path 95 may be freely configured, and the shape may be helically continuous in the circumferential direction, or the shape may be continuous in the circumferential direction while traveling back and forth in the axial direction. In the present embodiment, the refrigerant flow path 95 may include, as illustrated in FIG. 3, a plurality of circumferential flow paths 953 traveling in parallel to each other in the circumferential direction from an axial flow path 951 having an inlet 9511 and an axial flow path 952 having an outlet 9512, the axial flow path 951 and the axial flow path 952 being adjacent to each other in the circumferential direction.

An inner circumferential portion 9010 forming the inner circumferential face 901 is, for example, a portion having a uniform thickness, and has a tubular shape in which the rotation axis 12 of the rotor 30 is positioned in the center. An outer circumferential portion 9020 forming the outer circumferential face 902 is, for example, a portion having a uniform thickness, and has a tubular shape in which the rotation axis 12 of the rotor 30 is positioned in the center. The inner circumferential portion 9010 and the outer circumferential portion 9020 may have the same thickness.

The flow path forming member 90 includes dividers 9030 that extend in the radial direction and the circumferential direction between the inner circumferential portion 9010 and the outer circumferential portion 9020. Each of the dividers 9030 separates two axially adjacent ones of a plurality of the circumferential flow paths 953.

A fluid circulating through the refrigerant flow path 95 is cooling water, but the fluid may be other liquids (for example, oil) or a gas in a variation example.

The flow path forming member 90 is provided on the stator core 211 in such a way that the inner circumferential face 901 is in close contact with an outer circumferential face of the stator core 211. Specifically, the flow path forming member 90 is mounted on the stator core 211 in such a way that an inner diameter after assembly is larger than that before assembly. The flow path forming member 90 can be elastically deformed in such a way that the inner diameter is increased (the diameter is enlarged), which enables the flow path forming member 90 to be in closer contact with the stator core 211. When the flow path forming member 90 is in closer contact with the stator core 211, heat conductivity between the flow path forming member 90 and the stator core 211 increases. In other words, thermal resistance between the flow path forming member 90 and the stator core 211 decreases. Thus, the stator core 211 can be efficiently cooled with the cooling water in the refrigerant flow path 95.

The inner circumferential face 901 of the flow path forming member 90 may be directly in close contact with the outer circumferential face of the stator core 211, or the inner circumferential face 901 may be in close contact with the outer circumferential face of the stator core 211 through high thermal conductive grease. Presence of such high thermal conductive grease is preferable when the stator core 211 is constructed of electrical steel sheets. It is preferable because the heat conductivity can be improved by applying grease and smoothing surfaces of the electrical steel sheets since the surfaces are rough (because of minute undulation).

The flow path forming member 90 is preferably provided, as illustrated in FIG. 1, on the stator core 211 throughout its entire length in the axial direction. In this manner, the stator core 211 can be efficiently cooled throughout its entire length in the axial direction.

The flow path forming member 90 is preferably provided, as illustrated in FIG. 2, on the stator core 211 in such a way that the inner circumferential face 901 is in close contact with the outer circumferential face of the stator core 211 throughout the entire circumference of the stator core 211.

In this manner, the flow path forming member 90 according to the present embodiment includes the refrigerant flow path 95 inside, thereby enabling necessity of sealing to be substantially eliminated. In addition, the flow path forming member 90 does not generate stress to be applied to the stator core 211 as in the case of shrink fitting although the flow path forming member 90 is pressed to the stator core 211 due to elastic deformation. Thus, according to the present embodiment, necessity of sealing is reduced and need for shrink fitting is eliminated while enabling the stator core 211 to be efficiently cooled.

In a configuration in which the stator core 211 is fastened to the motor case 10 with a bolt BT (see FIG. 1), an outer circumferential shape of the stator core 211 protrudes to the radially outer side in a convex shape in a region where the bolt BT penetrates (hereinafter referred to as an "ear portion 214"), which may make it difficult for the inner circumferential face 901 of the flow path forming member 90 to be in close contact with the outer circumferential face of the stator core 211 in the ear portion 214.

In view of this, in the stator core 211, a transition section between the ear portion 214 and other outer circumferential portions is preferably lengthened as illustrated in FIG. 2. In other words, change in the outer diameter is moderated. For example, the length in the circumferential direction of the transition section may be equal to or longer than the length in the circumferential direction of the region where the bolt BT penetrates. This configuration can reduce possibility of contact between the inner circumferential face 901 of the flow path forming member 90 and the outer circumferential face of the stator core 211 being weakened due to the ear portion 214.

In the present embodiment, as illustrated in FIG. 4, the cross-section of each refrigerant flow path 95 along the axial direction is a rectangle having the same cross-sectional area, but the cross-sections may be rectangles having different cross-sectional areas. In the present embodiment, the cross-sections of the refrigerant flow paths 95 are rectangles, but the cross-sections may have other shapes such as a circular shape. When the cross-section is a rectangle, a section in the axial direction that enables a thickness in the radial direction of the inner circumferential portion 9010 to be relatively thin can be configured to be relatively longer, thereby efficiently improving a cooling capacity.

In the present embodiment, the inner circumferential portion 9010, the outer circumferential portion 9020, and the divider 9030 of the flow path forming member 90 may be made from the same material, but they may be made from different materials. For example, the inner circumferential portion 9010, the outer circumferential portion 9020, and the divider 9030 may be formed in such a way that hardness of the divider 9030 is significantly higher than hardness of the inner circumferential portion 9010 and the outer circumferential portion 9020. Increasing the hardness of the divider 9030 prevents the refrigerant flow path 95 from being crushed even after the flow path forming member 90 is assembled (that is, in an elastically deformed state) and enables a desired cross-sectional area to be secured. This also prevents the divider 9030 from being easily inclined with respect to the radial direction and enables shape stability of the divider 9030 to be improved. In addition, configuring the hardness of the inner circumferential portion 9010 and the outer circumferential portion 9020 to be relatively low enables conformability of the flow path forming member 90 to be improved and the flow path forming member 90 to be in closer contact with the stator core 211.

In the present embodiment, hardness of the flow path forming member 90 is preferably Shore hardness of 20 to 80 and more preferably Shore hardness of 40 to 70. This prevents the refrigerant flow path 95 from being crushed while enabling conformability of the flow path forming member 90 to the stator core 211 to be improved.

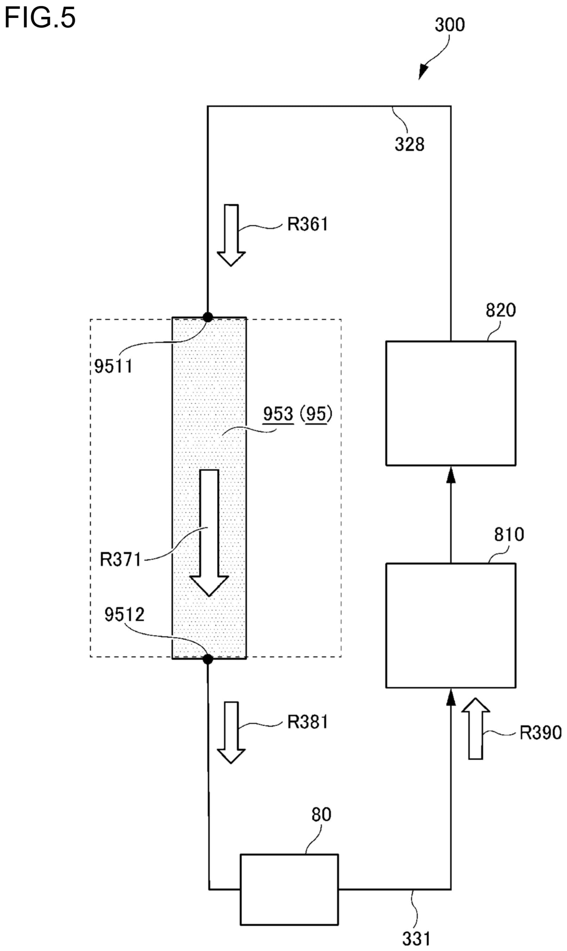

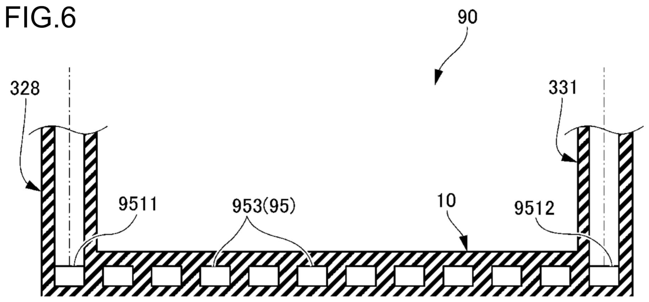

FIG. 5 is a schematic diagram illustrating an example of a cooling system 300 that circulates through the refrigerant flow path 95 of the flow path forming member 90 according to the present embodiment. In FIG. 5, flow of the cooling water is schematically indicated with an arrow R361 and the like. FIG. 6 is a cross-sectional view illustrating examples of the inlet 9511 and the outlet 9512.

In FIG. 5, the cooling water discharged from a water pump 810 passes through a radiator 820. The radiator 820 cools the cooling water by performing heat exchange with outside air. The cooling water cooled by the radiator 820 passes through a feeding flow path 328 and flows toward the refrigerant flow path 95 (see the arrow R361). The cooling water supplied to the refrigerant flow path 95 from the inlet 9511 cools the stator core 211 while flowing through the refrigerant flow path 95 (see an arrow R371) before being discharged from the outlet 9512. The refrigerant flow path 95 may include, as illustrated in FIG. 6, the inlet 9511 at one end in the axial direction and the outlet 9512 at the opposite end in the axial direction. The cooling water that has cooled the stator core 211 is introduced from the outlet 9512 of the refrigerant flow path 95 into an outlet flow path 331 on a side of the outlet (see an arrow R381), then passes through an object to be heated 80 and returns to the water pump 810 (see an arrow R390). In FIG. 5, the water pump 810 is disposed between the outlet flow path 331 and the radiator 820, but the water pump 810 may be disposed between the radiator 820 and the feeding flow path 328 by connecting the outlet flow path 331 to the radiator 820. All or part of the feeding flow path 328 and the outlet flow path 331 or one of them may be made from a material different from that of the flow path forming member 90 (such as metal).

In the example illustrated in FIG. 5, the object to be heated 80 may be anything desired, but it may be, for example, a high-voltage battery for supplying power to the rotating electric machine 1, for example. This configuration can quickly and appropriately raise the temperature of the high-voltage battery and improve a performance of the high-voltage battery while a vehicle is traveling even when the vehicle has been stopped in a low-temperature environment, for example, due to being parked for a relatively long time and the high-voltage battery is very cold.

In the present embodiment, a purpose of utilizing heat generated in the rotating electric machine 1 is to heat the high-voltage battery, but instead of or in addition to this, the heat may be utilized for other purposes. For example, purposes of utilizing the heat generated in the rotating electric machine 1 may include heating oil itself. In other words, the object to be heated 80 may be oil itself.

In the example illustrated in FIG. 5, the oil introduced into the outlet flow path 331 always passes through the object to be heated 80 and returns to the water pump 810, but the flow path may be switched by means of a valve or the like. In this case, only when the temperature of the object to be heated 80 is below a lower limit, the oil introduced into the outlet flow path 331 may be configured to pass through the object to be heated 80 and return to the water pump 810.

In order to efficiently transfer heat drawn from the stator 21 to the object to be heated 80 by means of the cooling water in the refrigerant flow path 95, it is advantageous to prevent the heat of the cooling water in the refrigerant flow path 95 from being lost to other objects that are not subject to heating.

Therefore, in the present embodiment, a gap Δ as illustrated in FIG. 1 is given between the flow path forming member 90 and the motor case 10. In other words, the flow path forming member 90 is not in direct contact with the motor case 10 in the radial direction. This configuration can prevent the heat of the cooling water in the flow path forming member 90 from being lost to the motor case 10. Since the motor case 10 has a relatively large volume (heat capacity), the effect is significant.

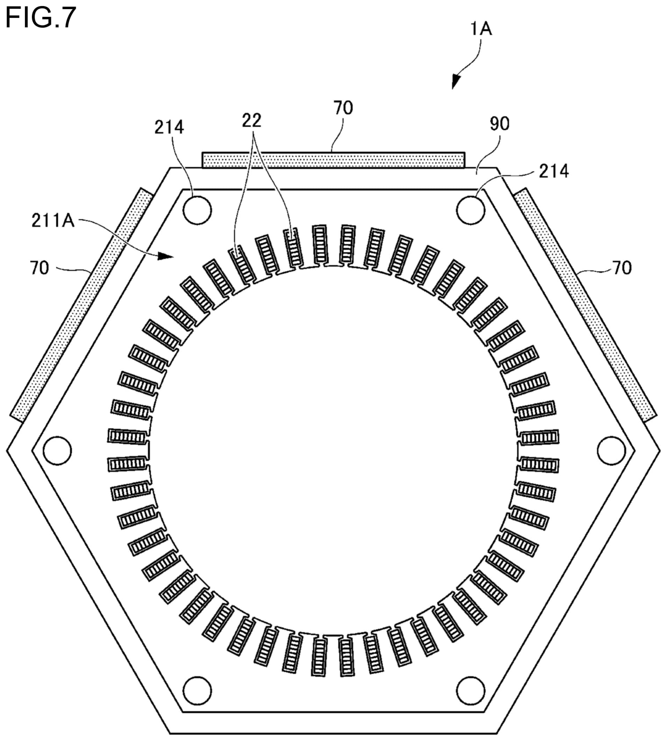

FIG. 7 is a diagram for describing a rotating electric machine 1A of a variation example. In FIG. 7, illustration of the rotor 30 is omitted.

The rotating electric machine 1A is different from the rotating electric machine 1 in that an outer circumferential shape of a stator core 211A is a polygonal shape. Accordingly, the shape of the flow path forming member 90 is a polygonal shape when viewed in the axial direction. As described above, the outer circumferential shape of the stator core 211A may be any shape as long as the flow path forming member 90 can easily conform to that shape.

In the present variation example, the flow path forming member 90 further includes a heating element 70 for controlling energization of the stator coil 22 on the outer circumferential face 902. The heating element 70 may be an element constituting an inverter (not illustrated) electrically connected to the stator coil 22. In this case, the heating element 70 may be a switching element such as a MOSFET (metaloxide semiconductor field-effect transistor) or an IGBT (insulated gate bipolar transistor). The heating element 70 may include a smoothing capacitor between the inverter (not illustrated) and the high-voltage battery (not illustrated). The heating element 70 may be in the form of a module or may be mounted on a substrate. In the present embodiment, since the outer circumferential face 902 of the flow path forming member 90 is planar, mounting the heating element 70 is easy.

According to the variation example, the heating element 70 can be also efficiently cooled by means of the cooling water in the flow path forming member 90. In addition, by using the radial gap Δ between the flow path forming member 90 and the motor case 10, the heating element 70 can be disposed, thereby achieving efficient use of spaces. A radial gap (not illustrated) may be still given between the heating element 70 and the motor case 10 when the heating element 70 is disposed, or the gap Δ may be plugged with the heating element 70.

Although embodiments have been described above in detail, this disclosure is not limited to those specific embodiments and various variations and modifications may be made within the scope defined by the claims. In addition, two or more or all of components in the embodiments described above may be combined.

For example, in the embodiment described above, the flow path forming member 90 is a single member and surrounds the entirety of the stator core 211 in the axial direction, but the flow path forming member 90 may be split in the axial direction. In other words, a plurality of the flow path forming members 90 arranged continuously in the axial direction may surround the entirety of the stator core 211 in the axial direction. In this case, the refrigerant flow paths 95 in the flow path forming members 90 need not be communicated with each other around the stator core 211, and the refrigerant flow paths 95 may individually include the inlet 9511 and the outlet 9512. In this case too, the refrigerant flow paths 95 can be arranged around the stator core 211 with a plurality of the flow path forming members 90 without increasing necessity of sealing.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotating electric machine (1) comprising:
a rotor (30);
a stator core (211) including a slot in which an electrically conductive winding is disposed; and
a tubular member in a tubular shape in which a rotation axis of the rotor (30) is positioned in a center, the tubular member being elastically expandable in a radial direction and having heat conductivity, wherein
the tubular member includes a refrigerant flow path (95) between inner and outer circumferential faces (901, 902), and the tubular member is provided on the stator core (211) in such a way that the inner circumferential face (901) of the tubular member is in close contact with an outer circumferential face of the stator core (211).

2. The rotating electric machine (1) according to Claim 1, further comprising a case (10) for accommodating the rotor (30), the stator core (211), and the tubular member, wherein the case (10) faces against the outer circumferential face (902) of the tubular member in a radial direction via a gap (Δ).

3. The rotating electric machine (1) according to Claim 1 or 2, further comprising a heating element (70) for controlling energization of the winding on the outer circumferential face (902) of the tubular member.

4. The rotating electric machine (1) according to any one of Claims 1 to 3, wherein the tubular member includes an inner circumferential face (901) being in close contact with entirety of the outer circumferential face of the stator core (211).
